(19)

Europäisches
Patentamt
European
Patent Office
Office européen
des brevets

(11) **EP 2 339 814 A1**

(12) **EUROPEAN PATENT APPLICATION**

(43) Date of publication:
29.06.2011 Bulletin 2011/26

(51) Int Cl.:
*H04L 29/08* $^{(2006.01)}$    *H04L 29/06* $^{(2006.01)}$
*H04N 7/00* $^{(2011.01)}$

(21) Application number: 09382307.8

(22) Date of filing: 28.12.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicant: Telefónica, S.A.
28013 Madrid (ES)

(72) Inventors:
• Yang, Xiaoyaun
28013, MADRID (ES)

• Gjoka, Minas
28013, MADRID (ES)
• odriguez, Pablo
28013, MADRID (ES)
• Chhabra, Parminder
28013, MADRID (ES)

(74) Representative: Carpintero Lopez, Francisco et al
Herrero & Asociados, S.L.
Alcalá 35
28014 Madrid (ES)

(54) **Method for downloading segments of a video file in a peer-to-peer network**

(57)    Method for downloading segments of a video file in a peer to peer network which comprises requesting to create new neighbourhood lists according to a health parameter which indicates availability of video segments among neighbors. Scheduling methods for the upload and download schedulers which work in synergy with the aforementioned features are also disclosed.

EP 2 339 814 A1

**Description**

## FIELD OF THE INVENTION

The present invention relates to data transfer in a Peer-to-Peer network, more particularly, to Video On Demand services in such networks.

## BACKGROUND OF THE INVENTION

In Peer-to-Peer (P2P) systems, a number of nodes use different connectivity means to participate in an ad-hoc network in which cumulative bandwidth of network participants is used, rather than conventional centralized systems where a relatively low number of servers provide services to the rest of the nodes, which act as clients. In P2P networks, nodes can be classified as follows:

- A Source (or Server or Seed) is the only node with a complete copy of the file at all times.
- A Peer is a node that functions both as a client and as a server to other nodes in a P2P network. It informs the rest of the nodes of its available data segments via *Have Messages,* which are messages sent out by a peer upon downloading a data segment.

A network component called tracker provides the peers with all the necessary information for bootstrapping the delivery process to the requesting peer. The tracker is also responsible for providing a requesting peer with a neighborhood of peers so that they have data to exchange.
Given the popularization of television channels providing contents over the Internet, Video on Demand (VoD) service over P2P networks has recently experienced a rapid growth, and as a result, a number of different systems and schemes have thus been proposed.
The first P2P video systems were built for live video streaming and included tree-based overlays or mesh-based overlays. The next generation video P2P systems were designed to support VoD, for example by dividing missing blocks into two sets (low priority and high priority), and scheduling requests accordingly from peers and the server. In *"Is High-Quality VoD feasible using P2P Swarming"* (S. Annapureddy et al., *WWW,* 2007) the authors show the benefits of network coding to simplify the segment scheduling problem and provide high quality VoD services. In *"A Simple Model for Analyzing P2P Streaming Protocols"* (Y. Zhou et al., Proc. of ICNP, 2007) the authors present an analytical formulation of the impact of various scheduling policies to optimize VoD performance. In *"Challenges, Design and Analysis of a Largescale P2P VoD System"* (Y. Huan et al., Proc. of Sigcomm, 2008), the authors describe the challenges faced by a commercial P2P VoD system and propose content discovery, replication, and scheduling algorithms to deal with these challenges.
Some recent works have discussed some of the issues that can arise when designing P2P systems that support DVD-like functionality. In *"A Measurement Study of a Peer-to-Peer Video-on-Demand System"* (B. Cheng, IPTPS, 2007), the authors introduce the concept of anchors to prefetch data at predefined points of the video and allow for jumps to such points. In *"Supporting VCR functions in P2P VoD Services Using Ring-Assisted Overlays"* (B. Cheng, ICC, 2007), a more aggressive proactive caching is proposed, which proactively creates multiple copies of every segment on an overlay, thus reducing the dependence on the source. The goal is to ensure that all blocks are replicated in-overlay, regardless of when the set of active peers in the overlay will require them to support current playback. In *"DVD-like features in P2P Video-on-Demand-Systems"* (N. Vratonjic et al., ACM P2P-TV Workshop, 2007), the authors propose a gossip protocol over a ring, where each peer keeps some nearby neighbors as well as some remote neighbors following a power-law radius, and show via simulations that they can handle random seeks.
The above systems focus either on how to prefetch content across the swarm or how peers should relate to each other, and use simulations to evaluate simple random jump patterns, which could bias the design of the system. Aggressive prefetching could result in wasted server and peer resources if jumps do not occur, and matching peers is only one part of the design space that cannot obtain a full optimization by itself.
There is thus the need of a method that allows serving video-on-demand through a peer to peer network, in a manner that allows the inclusion of DVD-like features while using bandwidth efficiently.

## SUMMARY OF THE INVENTION

This invention solves the aforementioned problems by disclosing a method to download segments of a video file in a Peer to Peer network in order to provide Video-On-Demand Services, optimizing the user experience and the bandwidth use while allowing DVD-like functionalities.
The method is performed by a peer which provides a video player with segments of a video file, one of the segments being currently played. The segments are downloaded from other peers of a subset chosen from a neighborhood list provided by a network tracker.

To optimize the neighborhood list, the peer periodically monitors its usefulness by means of computing an individual health ratio for each peer of the neighborhood, being said health factor the ratio of complete segments that the neighbour peer has in a given window. Said window starts in the currently played segment and comprises the next W segments, being W the length of the window.

A joint health ratio is thus computed as an average of all the individual health ratios, being this joint ratio compared to a predefined threshold. If the joint ratio is lower than the threshold, the peer request the tracker to create and send a new neighbor list.

This feature of the invention enhances the user experience for the user of the service, as it allows to dynamically provide an optimized group of connected peers, which translates into a more efficient data transmission.

Also preferably, the method uses the following equation to relate its parameters, thus assigning them appropriate values that optimize the performance of the method:

$$t = \text{(Maximum number of connections * Maximum numbers of neighbours)/Window length}$$

wherein the maximum number of connections is the maximum size of the aforementioned subset of peers from the neighborhood list.

This invention also introduces a variety of preferred aspects of the method which work in synergy to improve the user experience by optimizing the amount and content of transferred data:

- Download scheduling policy, which chooses the segments of the video file which are to be requested by the peer. The scheduling best operates by implementing a dynamic hybrid policy that combines a greedy policy (requesting segments closest to the playback point of the first user) and a local-rarest policy (requesting segments that are the least present in the group of peers connected to the first peer, thus improving the availability of those segments). Preferably, the weight of each policy is modified dynamically by estimating the time when a segment from the aforementioned window is to be requested by the user, and the time when that segment is to be completely downloaded by the peer.

- Upload scheduling policy, which chooses which requests from other peers are granted and which are rejected. The upload scheduling preferably implements a gossip mechanism, that is, whenever the upload of a segment is rejected by the first peer, the first peer sends a message informing of the location of another peer which has that segment. Preferably, the upload scheduler always accepts requests which have exceeded a tolerance parameter, and prioritizes those requests which correspond to the local-rarest segments.

- *Have* messages, which are generated in a Peer-to-Peer network as notifications to inform the neighbors that a peer has completed downloading a segment. The Have messages are preferably batched when the addressee of the message already has that segment. The batched messages are sent together when the peer downloads a segment which the addressee does not have. This reduces the traffic of unnecessary information, and allows a better use of the bandwidth.

All the mentioned advantages, along with other performance improvements introduced by the present method will be clear in the light of the detailed description of the invention.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:

Figure 1 shows a flowchart of the dynamic scheduling algorithm presented for the download scheduler.
Figure 2 shows an example of start-up delays for different scheduling policies.
Figure 3 shows an example of server load under different scheduling policies.
Figure 4 shows an example of overhead due to Have messages at each peer.

## DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

As described in the background of the invention, any P2P system is composed of a minimum of three components: Tracker, Peer and Server.

A key function of the tracker is the discovery and meshing together of peers that have content to exchange. A peer contacts the tracker on the occurrence of any one of the following events

(1) When the user first launches a Video-on-Demand (VoD) service, that is, when the user requests to play a certain media.

(2) At every jump (or DVD) operation, that is, going forward or backward in the video file.

(3) If the health of a peer's neighborhood falls below a predefined threshold. The health factor, h is defined as the percentage of useful segments that a peer's neighbor has, wherein useful segments are those that are within a window W of currently playing segment.

All the above events result in the tracker returning a list of collaborator peers to the requesting peer. By observing that peers who are close in playing point can benefit by collaborating, the tracker attempts to create a high quality neighborhood by returning peers who are close in playback point to the requesting peer. By creating high quality neighborhoods, the tracker ensures that the server is not overwhelmed by requests unless as the last resort.

In a preferred embodiment of the present invention, every peer has a neighborhood manager that reshuffles a peer's neighborhood when necessary. Periodically (or every few seconds), each peer calculates the health factor h of its neighborhood. If the health factor falls below a pre-defined threshold t, more collaborators are requested from the tracker, connection with the non-useful peers is reset and new neighbor relationships are created.

Both t and Window size W have impact on the tracker and server load. If W is set to be too short, the peer only take into account those neighbours who have segments that are close to the its playpoint. All other neighbours who have segments outside the window are considered not useful. As consequence, peer will generate more requests to the tracker for new neighbours. Similarly, if the value of t is too high, it triggers frequent updates to the tracker, while a small value of t results in a lot of content coming from the server since neighbour peers do not hold interesting content. A careful choice of both parameters is necessary to strike a good balance between getting data from the server or often contacting the tracker. A reasonable value of threshold t can be calculated as follows:

$$t = (\text{max number of connections} * \text{max number of neighbors}) / \text{Window size}.$$

In a preferred embodiment, window size (W) is chosen so that W is in the range of 200-250. Alternately, t can be fixed to be between 0.2 and 0.25 and this then this value can be used to obtain the length W.

The peer uses a maximum of 5 data connections with the neighbors. The reason for this limited number of data connections is that the start-up delay is not acceptable for Video-on-Demand when using a huge number of connections.

Another key functionality of the neighborhood manager is the propagation of Have messages. Every time a peer successfully downloads a segment, it lets its neighbors know of the existence of the segment by issuing Have messages. It does this so the neighbors can request the same segment without going to the server and so the neigbour can use the information of the newly downloaded segment to calculate the local-rarest segment in the neighborhood.

A key optimization of the invention is to minimize the number of Have messages exchanged between peers. Flooding neighbors with Have messages can carry a heavy overhead at every peer. The number of such updates is minimized by leveraging the fact that nodes that already have a given segment are not required to immediately know about the Have messages for that same segment coming from other peers. When a peer knows that a neighbor peer already has the segment, the Have message of that segment is batched. As soon as the peer downloads a segment that is not in the neighbor, it sends the Have message of the downloaded segment together with all batched messages.

Another aspect of the present invention deals with a scheduling policy at the download scheduler that, in synergy with the rest of the design, ensures continuous playback for a VoD system.

Prior works establish two possible scheduling policies:

- A sequential or greedy scheduling policy, which requires peers to download first the segments at the beginning of the window as these segments are needed first. This policy has the major drawback of not taking into account the rarity of the segments.
- A rarest-first scheduling policy, wherein each peer tries to download first the segments that are least replicated among its neighbors.

The download scheduler faces the following trade-off: on one hand a peer wants to download the next segments for its own continuous playback; on the other hand it wants to download the local-rarest segment to help the swarm performance. A hybrid of sequential and local-rarest policy is thus defined which dinamically adjusts the weight of each policy according to the changing scenario.

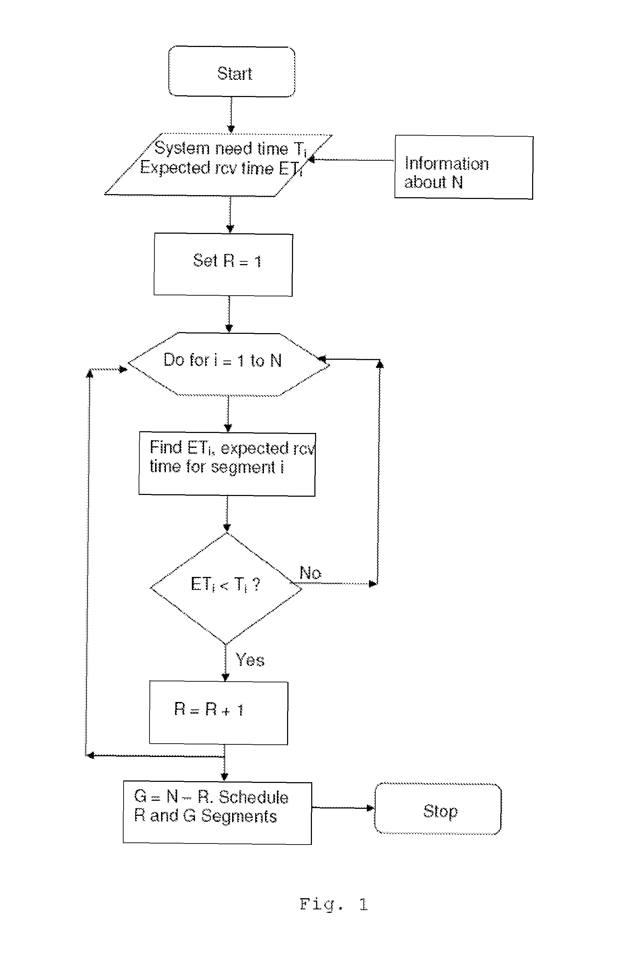

Since each peer can have a maximum of five data connections, it initially starts off downloading four segments using a greedy strategy to help its continuous playback and one using the local-rarest to be altruistic to the neighbors. Over the course of the download, depending on the swarm performance, and the number of segments in the buffer, the algorithm tunes itself and vary the number segments to be downloaded using local-rarest and greedy. In fact, the ratio of sequential vs. local-rarest is tuned continuously depending on the buffer size and the deadline of each segment, as shown of figure 1. For instance, if a node has a very large buffer of which it has several seconds worth of segments for continuous playback, then it may use all its bandwidth to help the system with a local-rarest policy.

For a peer, the choice of which neighbor to request the segments is governed by a simple rule. The peer requests segments from neighbors who have the least number of segments. The rationale is to avoid making a request to peers who have lots of segments and so, may be overloaded with requests from other peers.

Focusing on the upload scheduler, it may deny peer requests if there are no more connections available (that is, if the number of active connections is equal to the maximum number of connections). Since the peers participate in a collaborative environment, if incoming requests are denied, a gossip mechanism is used: when a peer refuses to upload a segment it suggests the location of another peer that has the segment. The upload scheduler of the source server gives priority to accepting requests for the local rarest segments and can reject to serve other requests; the rationale is to avoid sending duplicates and thus waste resources. There is one exception to this rule: a request is always accepted if the segment has exceeded a delay-tolerance parameter, which captures the maximum delay that a peer can tolerate for each segment. If the delay tolerance is exceeded and the peer cannot find the segment from the swarm, then the peer can go to the source as a last resort; this policy bounds the jump delay at the expense of potentially more capacity at the source.

To evaluate the system performance, a comparison of the start-up delay and the server load under different scheduling policies (greedy, local-rarest and the proposed hybrid) is presented.

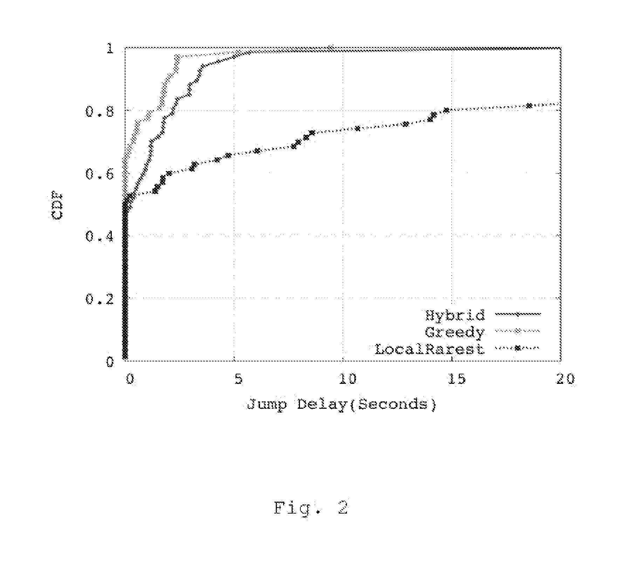

Figure 2 shows that the greedy policy is the best in terms of jump delay because the peer uses all the bandwidth to download only the segments they need next, whereas local-rarest is the worst because the peers are fetching segments for the benefit of the swarm. The performance of hybrid policy is very close but not better than greedy because a minimum of 1/5 of the bandwidth is allocated to download rare segments. Here, the percentage of the bandwidth allocated for local rarest fluctuates according to the buffer state of the peer.

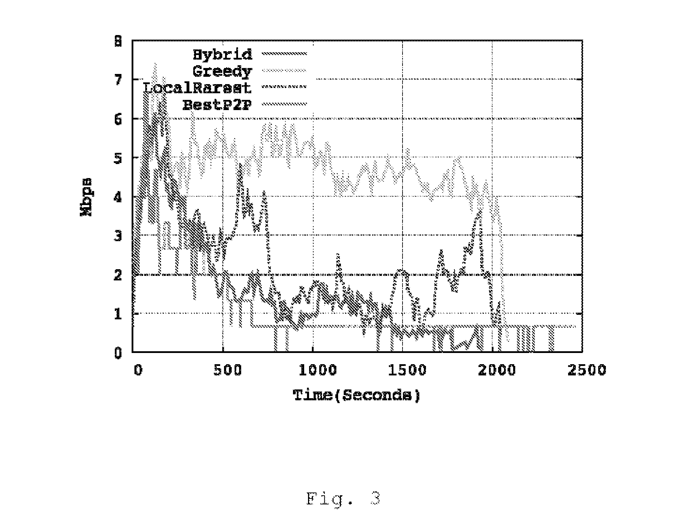

Good latency can come at the expense of high server load for inefficient algorithms. Figure 3 shows the server load in three cases with 170 peers. The load in the BestP2P, an ideal system, is also included as a reference.

In BestP2P, peers have infinite upload bandwidth and number of active upload connections which allows them to instantaneously disseminate all segments, once provided by the source peer. In each timeslot, peers request different segments from the source. The source must have enough capacity to immediately serve all requests for segments that have not been requested before; but it relies on the peer-to-peer swarm to distribute already served segments.

While the greedy policy provides very good latency, it comes at the expense of very high server load, since peers in the system that do not find the blocks that they need, turn to the server. In fact, the average server load is 4.5Mbps and remains high for 2000 seconds. When looking at the local-rarest policy, a lower server load is observed. However, this comes at the expense of poor start-up delays.

Although the local-rarest policy keeps all segments of a video well represented, it pays a heavy price in latency since it does not sufficiently take care of its own playback.

The proposed dynamic-hybrid policy achieves the best compromise between low server load and reasonable start-up latency. Under this policy, every peer altruistically uses at least 1/5 of bandwidth to improve the diversity of segments in the neighborhood. Thus, peer departures do not result in aggressive reseeding of vanished segments from the server. Since only a part of the peer's resources are allocated to the altruistic behaviors, the hybrid policy is less proactive in duplicating segments. The server load for the hybrid policy is slightly better than that under BestP2P.

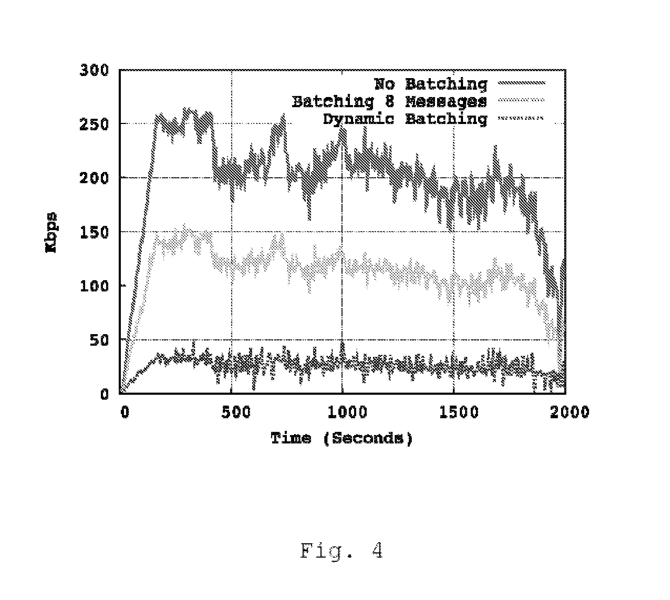

Figure 4 shows the overhead of have messages on each peer both with and without optimizations. In the first case, without any optimization, the average load on a peer is close to 210 Kbps. Using a simple optimization that batches 8 have messages in one network packet, the average overhead at each peer drops to about 110 Kbps. However, simple batching will affect the performance of the system because of the potential mis-calculation of the local-rarest metric as well issuing unnecessary requests to the server (since in some cases the neighbor does not know that a segment has been already downloaded by peer).

The proposed out-of-order dynamic batching technique has two advantages. First, it reduces the average per-peer overhead to only 30Kbps. This is possible because under this technique, we do not impose a maximum number of have messages in one network packet. As long as a have message can fit in the current packet, it is batched. Secondly, as soon as a peer detects that the neighbor does not have the segment, it sends the have message. This technique does not affect the performance of the download scheduler since a newly available segment is immediately advertised to the neighbor peers.

This detailed description, along with the figures, describes preferred embodiments of the invention, and it should not considered as restricting, as a number of variations can be performed on those embodiments within the scope of the invention.

**Claims**

1. Method for downloading segments of a video file by a peer in a Peer-to-Peer network, wherein one of the segments is a currently playing segment which contains data currently played by a video player; wherein the method comprises:

   - selecting a subset of peers from a neighborhood list which contains locations of neighbour peers which have available segments of the video file;
   - downloading segments from the subset of peers;

   **characterised in that** the method further comprises the steps of:

   - periodically computing:

      - an individual ratio for each neighbor peer, wherein the individual ratio equals a fraction of complete useful segments which the neighbor peer has, being useful segments the segments comprised in a window with a predefined length which starts from the currently playing segment ; and
      - a joint ratio by averaging the individual ratios of every neighbor peer of the neighborhood list.

   - comparing the joint ratio with a predefined threshold and, if the joint ratio is lower than the predefined threshold, requesting the network tracker to create and send a new neighborhood list.

2. Method according to claim 1 **characterised in that** the predefined threshold equals a maximum size of the subset times a maximum size of the neighborhood list divided by the length of the window.

3. Method according to any of the previous claims **characterised in that** the predefined threshold is fixed to a numeric value between 0.2 and 0.25.

4. Method according to any of claims 1 and 2 wherein the length of the window is fixed to a numeric value between 200 and 250.

5. Method according to any of the previous claims, **characterised by** comprising a step of requesting to download segments from the subset of peers which further comprises:

   - setting a first number of requests which request a segment with a first policy, wherein the first policy is to request segments closest to the segment containing the playback point in the video file of the user of the first peer;
   - setting a second number of requests which request a segment with a second policy; wherein the second policy is a local-rarest policy, which requests a least available segment at the peers connected to the first peer.

6. Method according to claim 5 **characterised in that** the second number of requests is initially set to one.

7. Method according to any of claims 5 and 6 **characterised in that** the step of requesting to download segments from the subset of peers further comprises:

   - estimating, for each segment being downloaded, a time when the segment is fully downloaded;
   - estimating, for each segment being downloaded, a time when the segment is played by the video player;

- if, for any segment being downloaded, the time when the segment is played by the video player is shorter than the time when the segment is fully downloaded; increasing the second number by one and decreasing the first number by one.

**8.** Method according to any of the previous claims, **characterised by** comprising a step of determining whether to grant or reject upload requests from a plurality of requesting peers which further comprises:

- whenever an upload request is rejected, determining and reporting the location of an alternative peer which has the requested segment.

**9.** Method according to claim 8 **characterised in that** the step of determining whether to grant or reject upload requests from a plurality of requesting peers further comprises prioritizing granting upload requests for a least available segment at the subset of peers;

**10.** Method according to any of claims 8 and 9, **characterised in that** the step of granting or rejecting upload requests from a plurality of requesting peers further comprises always accepting a request which has a tolerance parameter which exceeds a tolerance threshold.

**11.** Method according to any of the previous claims, **characterised by** further comprising:

- generating a notification for each peer of the subset of peers whenever a segment is fully downloaded;
- if the peer of the subset of peers already has the fully downloaded segment, batching the notification;
- if the peer of the subset of peers does not have the fully downloaded segment, sending the notification along with all the batched notifications.

**12.** A computer program comprising computer program code means adapted to perform the steps of the method according to any claims from 1 to 11, when said program is run on a programmable electronic device selected from a group of: a general purpose processor, a digital signal processor, a field-programmable gate array, an application-specific integrated circuit, a micro-processor and a microcontroller.

Start

System need time $T_i$
Expected rcv time $ET_i$

Information about N

Set R = 1

Do for i = 1 to N

Find $ET_i$, expected rcv
time for segment i

$ET_i < T_i$ ?

No

Yes

R = R + 1

G = N − R. Schedule
R and G Segments

Stop

Fig. 1

Fig. 2

Fig. 3

Fig. 4

EP 2 339 814 A1

Europäisches
Patentamt
European
Patent Office
Office européen
des brevets

# EUROPEAN SEARCH REPORT

Application Number

EP 09 38 2307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | X. Yang et al.: "Understanding the impact of VCR operations in P2P VoD systems"<br><br>30 November 2007 (2007-11-30), pages 1-7, XP002595298<br>Retrieved from the Internet:<br>URL:http://minasgjoka.com/papers/kangaroo-report.pdf<br>[retrieved on 2010-08-04]<br>* abstract *<br>* paragraph [I. Introduction] *<br>* paragraph [IV. System design] *<br>* paragraph [V.B Tracker load] * | 1-12 | INV.<br>H04L29/08<br>H04L29/06<br>H04N7/00 |
| L | -& Minas Gjoka: "Publications"<br><br>4 August 2010 (2010-08-04), pages 1-2, XP002595260<br>Retrieved from the Internet:<br>URL:http://www.minasgjoka.com/publications.html<br>[retrieved on 2010-08-04]<br>* the whole document * | 1-12 | |
| X | -----<br>X. Yang et al.: "Kangaroo: Video Seeking in P2P Systems"<br><br>21 April 2009 (2009-04-21), pages 1-6, XP002595280<br>Retrieved from the Internet:<br>URL:http://iptps.org/papers-2009/yang.pdf<br>[retrieved on 2010-08-04]<br>* abstract *<br>* paragraph [1. Introduction] *<br>* paragraph [2. Architecture] *<br>* page 5, column 1, paragraph 2 - paragraph 3.2 Scheduler Performance *<br>-/-- | 1-12 | TECHNICAL FIELDS SEARCHED (IPC)<br>H04L<br>H04N |

The present search report has been drawn up for all claims

| Place of search | Date of completion of the search | Examiner |
|---|---|---|
| Munich | 6 August 2010 | Jeampierre, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 339 814 A1**

Europäisches
Patentamt
European
Patent Office
Office européen
des brevets

# EUROPEAN SEARCH REPORT

Application Number

EP 09 38 2307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | -& IPTPS: "IPTPS International workshop on Peer-To-Peer Systems" <br><br> 4 August 2010 (2010-08-04), pages 1-2, XP002595281 <br> Retrieved from the Internet: <br> URL:http://iptps.org/ <br> [retrieved on 2010-08-04] <br> * paragraph [WORKSHOPS] * | 1-12 | |
| L | -& IPTPS: "IPTPS Paper Archive" <br><br> 4 August 2010 (2010-08-04), pages 1-15, XP002595296 <br> Retrieved from the Internet: <br> URL:http://iptps.org/papers.html <br> [retrieved on 2010-08-04] <br> * page 2 * <br> ----- | 1-12 | |

TECHNICAL FIELDS
SEARCHED     (IPC)

The present search report has been drawn up for all claims

| Place of search | Date of completion of the search | Examiner |
|---|---|---|
| Munich | 6 August 2010 | Jeampierre, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. ZHOU et al.** A Simple Model for Analyzing P2P Streaming Protocols. *Proc. of ICNP,* 2007
- **Y. HUAN et al.** Challenges, Design and Analysis of a Largescale P2P VoD System. *Proc. of Sigcomm,* 2008
- **B. CHENG.** A Measurement Study of a Peer-to-Peer Video-on-Demand System. *IPTPS,* 2007
- **B. CHENG.** Supporting VCR functions in P2P VoD Services Using Ring-Assisted Overlays. *ICC,* 2007
- **N. VRATONJIC et al.** DVD-like features in P2P Video-on-Demand-Systems. *ACM P2P-TV Workshop,* 2007